Europäisches Patentamt

European Patent Office

Office européen des brevets

(11) Publication number: **0 140 624**
**B1**

## (12) EUROPEAN PATENT SPECIFICATION

(45) Date of publication of patent specification: **30.08.89**

(51) Int. Cl.⁴: **G 01 G 19/32**

(21) Application number: **84306994.9**

(22) Date of filing: **12.10.84**

(54) **Combinatorial weighing.**

(30) Priority: **15.10.83 JP 192988/83**

(43) Date of publication of application:
**08.05.85 Bulletin 85/19**

(45) Publication of the grant of the patent:
**30.08.89 Bulletin 89/35**

(84) Designated Contracting States:
**DE FR GB IT**

(56) References cited:
**EP-A-0 074 260**
**EP-A-0 085 446**
**EP-A-0 089 835**
**EP-A-0 127 183**
**PATENTS ABSTRACTS OF JAPAN, vol. 6 no.
233 (P-156)1111r, 19th November 1982; & JP -
A - 57 135 322**
**PATENTS ABSTRACTS OF JAPAN, vol. 8, no.
51 (P-259)1488r, 8th March 1984; & JP - A - 58
202 841**

(73) Proprietor: **KABUSHIKI KAISHA ISHIDA KOKI
SEISAKUSHO
44, Shogoin Sannou-cho Sakyo-ku
Kyoto-shi Kyoto 606 (JP)**

(72) Inventor: **Ikeda, Tetsuo
3-25-5, Karasaki
Ohtsu-shi Shiga (JP)**

(74) Representative: **Fane, Christopher Robin King
et al
HASELTINE LAKE & CO. Hazlitt House 28
Southampton Buildings Chancery Lane
London, WC2A 1AT (GB)**

Courier Press, Leamington Spa, England.

## Description

The present invention relates to combinatorial weighing.

Combinatorial weighing can be carried out by supplying articles to weighing hoppers associated with a number of weighing machines, effecting combinatorial computations on weight values from the weighing machines, selecting an optimum weight combination (having a total weight equal or closest to a target weight value), and opening the weighing hoppers of the weighing machines giving that optimum weight combination to produce a batch of articles having a total weight equal or closest to the target weight. The weighing hoppers of the weighing machines which were selected as giving the optimum weight combination and from which the articles have been discharged are supplied with articles again, and combinatorial computations are performed again. However, with such combinatorial weighing, after initiation of the discharge of articles from the machines selected in one weighing cycle, the combinatorial computation for the next weighing cycle cannot normally be commenced until new articles have been supplied to those discharged weighing machines, which factor limits the weighing cycle repetition rate.

One such combinatorial weighing process having means for increasing the weighing rate is disclosed in Japanese Laid-Open Patent Publication No. 57-86014, according to which about 15 weighing machines are provided, and 10 or fewer weighing machines are used in each cycle of combinatorial computations. If 5 weighing machines are selected in one weighing cycle as giving an optimum weight combination, the combinatorial computation for the next cycle is carried out in respect of 10 weighing machines, made up of the 5 weighing machines not selected as giving the optimum weight combination in the said one cycle and the 5 weighing machines not used in that one cycle, this computation being carried out while the articles are being discharged from the 5 weighing machines selected in the said one cycle. Articles are thereafter supplied again to the emptied weighing machines. Such a process may be termed a parallel weighing cycle.

However, such a process requires the provision of about 5 extra weighing machines, in addition to the 10 weighing machines which are in use for each individual combinatorial weighing cycle. The disclosed process therefore requires an overall apparatus of larger size than standard apparatus with 10 weighing machines only. The large-size apparatus has a large number of parts, is costly, and takes up a large installation space.

EP-A2-0085446 discloses a combinatorial weighing system using a plurality of storage vessels, into which the contents of the weighing machines can be discharged, there being a plurality of such storage vessels associated individually with each weighing machine. This enables the weighing cycle repetition rate to be increased, but requires the provision of at least twice as many storage vessels as there are weighing machines.

According to one aspect of the present invention there is provided a combinatorial weighing apparatus, for measuring out a desired batch of articles, comprising a set of weighing hoppers, for receiving individual quantities of the articles to be measured out, belonging to respective weighing machines for providing weight values indicative of the weights of the individual quantities in their respective weighing hoppers, and a plurality of storage hoppers arranged for receiving respective such individual quantities, discharged into those hoppers from respective weighing hoppers of the said set, whilst a control device of the apparatus completes a combinatorial computation operation based on a preset target total weight or number and on the weight values provided by the weighing machines for the respective individual quantities discharged into the storage hoppers, which operation serves to select a best acceptable combination of the said individual quantities discharged into the storage hoppers, the said control device being operative on completion of the said combinatorial computation operation to cause the individual quantities belonging to the selected combination to be discharged, from the respective storage hoppers concerned, and brought together to form such a desired batch, whereafter those hoppers are caused to receive fresh individual quantities respectively from weighing hoppers of the said set; characterised in that storage hoppers of the said plurality are arranged in a line, below a line of weighing hoppers of the said set, the apparatus being such that each pair of mutually adjacent weighing hoppers in the said line thereof is associated with one of the storage hoppers in the said line thereof so that either a first weighing hopper or an adjacent second weighing hopper of the said line thereof can be discharged selectively into a first storage hopper in the said line thereof, and so that either the said second weighing hopper or an adjacent third weighing hopper of the said line thereof can be discharged selectively into a second storage hopper in the said line thereof and adjacent to the said first storage hopper, and so on along the two lines.

According to a second aspect of the present invention there is provided a method of employing a set of weighing machines to measure out desired batches of articles by carrying out repeatedly a combinatorial weighing cycle, in which cycle respective weighing hoppers of the machines of the said set are supplied with individual quantities of the articles to be measured out, so that the machines provide respective weight values indicative of the weights of the individual quantities concerned, and a plurality of storage hoppers are used to receive respective such individual quantities, discharged from weighing hoppers of the said set, during completion of a combinatorial computation operation based on a preset target total weight or number and on the weight values provided by the weighing machines for the respective individual quantities discharged into the storage hoppers, which operation serves to select a best acceptable combination of the said individual quantities discharged into the storage hoppers, whereafter the individual quantities belonging to the selected combination are discharged from the respective storage hoppers which received those quantities, and brought together to form such a desired batch, and those hoppers are supplied with fresh such individual quantities respectively from weighing hoppers of the said set; characterised in that storage hoppers of the said plurality are arranged in a line, below a line of the weighing hoppers of the said set, each pair of mutually adjacent weighing hoppers in the said line thereof being dischargeable into a commonly associated one of the storage hoppers in the said line thereof, and in that in one such cycle a first weighing hopper of the said line thereof is discharged into a first storage hopper in the said line thereof, whilst in another such cycle a second weighing hopper adjacent to the said first weighing hopper in the said line thereof is discharged into the said first storage hopper, and in that in one such cycle the said second weighing hopper is discharged into a second storage hopper adjacent to the said first storage hopper in the said line thereof, whilst in another such cycle a third weighing hopper adjacent to the said second weighing hopper in the said line thereof is discharged into the said second storage hopper, and so on for the other storage hoppers and their associated pairs of the weighing machines of the respective lines thereof.

With an embodiment of the present invention, the storage hoppers which have been optimum (best acceptable) weight combination and from which articles have been discharged are immediately resupplied with weighed articles from weighing machines. All of the storage hoppers are available for combinatorial computations at all times, so that the articles can be weighed with consistent accuracy. Furthermore, since articles weighed by weighing machines are to be discharged to storage hoppers, as soon as the weighing machines have weighed the articles it is possible to begin the next combinatorial computation cycle.

Reference will now be made, by way of example, to the accompanying drawings, in which:

Fig. 1 shows a schematic side elevational view of a combinatorial weighing apparatus for putting into effect a first embodiment of the present invention;

Fig. 2 shows a schematic side elevational view of a combinatorial weighing apparatus for putting into effect a second embodiment of the present invention;

Fig. 3 shows a perspective view of a hopper arrangement used in each of the combinatorial weighing apparatuses of Figs. 1 and 2;

Fig. 4 is a perspective view of a hopper arrangement for a third embodiment of the present invention;

Figs. 5(A) and 5(B) are schematic views showing respective hopper arrangements for fourth and fifth embodiments of the present invention;

Fig. 6 is a block diagram of a control circuit for the combinatorial weighing apparatus illustrated in Fig. 2;

Figs. 8(1) to 8(6) are diagrams showing the manner in which hoppers are employed according to the timing chart of Fig. 7; and

Fig. 9 is a flowchart of an operational program for an embodiment of the present invention.

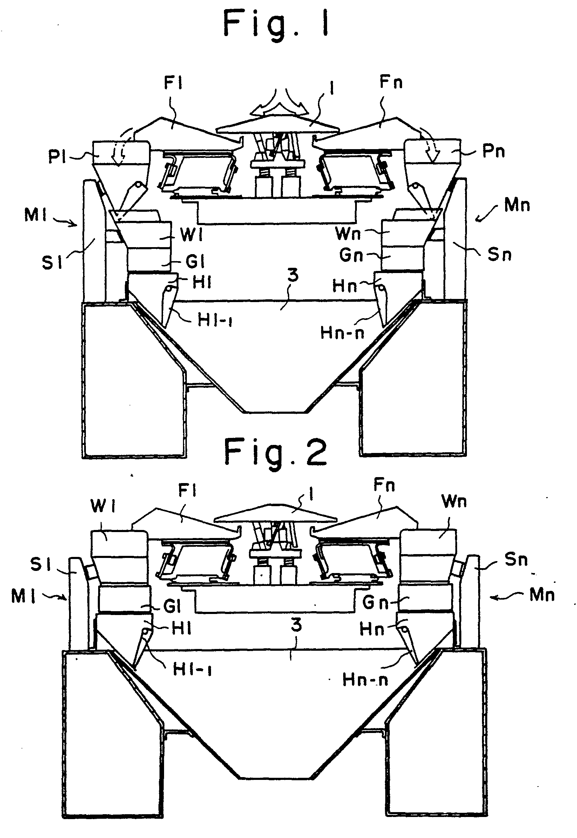

The combinatorial weighing apparatus of Fig. 1 includes a distribution table 1 for distributing articles, which have been dropped from a supply conveyor (not shown), radially outwardly into supply feeders F1, ..., Fn. The distribution table 1 is of the known vibratory feed type and can be vibrated for a certain period of time for supplying articles into the supply feeders F1, ..., Fn. The supply feeders F1, ..., Fn are disposed radially around the distribution table 1 and may be vibrated by known electric vibrators for feeding articles supplied from the distribution table 1 into pool hoppers P1, ..., Pn. The pool hoppers P1, ..., Pn are disposed radially outwardly and downwardly of the supply feeders F1, ..., Fn, respectively, and have lower gates.

Articles supplied to the pool hoppers P1, ..., Pn are then supplied therefrom into respective weighing hoppers W1, ..., Wn of a plurality of weighing machines M1, ..., Mn. The weighing machines M1, ..., Mn comprise the weighing hoppers W1, ..., Wn, and weight detectors S1, ..., Sn connected respectively thereto for providing weight values indicative of the respective weights of individual quantities of articles to be weighed, that are supplied to the weighing hoppers. The weighing hoppers W1, ..., Wn have lower discharge gate pairs G1, ..., Gn, the gates of each of which pairs can independently be swung open laterally in opposite directions.

As many storage hoppers H1, ..., Hn as there are weighing machines M1, ..., Mn are disposed below the discharge gate pairs G1, ..., Gn, each storage hopper being below and between two adjacent weighing hoppers W, so that each of the storage hoppers can be charged with articles from either one of the two adjacent weighing hoppers above the storage hopper concerned. The storage hoppers H1, ..., Hn have lower gates H1-1, ..., Hn-n, respectively.

A collection chute 3 is located below the storage hoppers H1, ..., Hn for collecting articles discharged from the storage hoppers H1, ..., Hn and feeding an optimum weight combination toward a lower central position. In the illustrated embodiment, the collection chute 3 is of an inverted conical shape. However, there may be employed a chute having guide grooves for guiding articles as they slide down, or a chute having two separate discharge passages. Where a chute with separate discharge passages is used, each of the discharge gates of the storage hoppers H1, ..., Hn should have gate doors which can be swung open laterally in opposite directions so that the gate doors will be opened and closed selectively to discharge articles into the respective discharge passages on the chute.

The combinatorial weighing apparatus of Fig. 2 is different from the apparatus of Fig. 1 in that there are no pool hoppers, designated at P1, ..., Pn in Fig. 1, and articles are supplied from the supply feeders F1, ..., Fn directly into the weighing hoppers W1, ..., Wn of the weighing machines M1, ..., Mn.

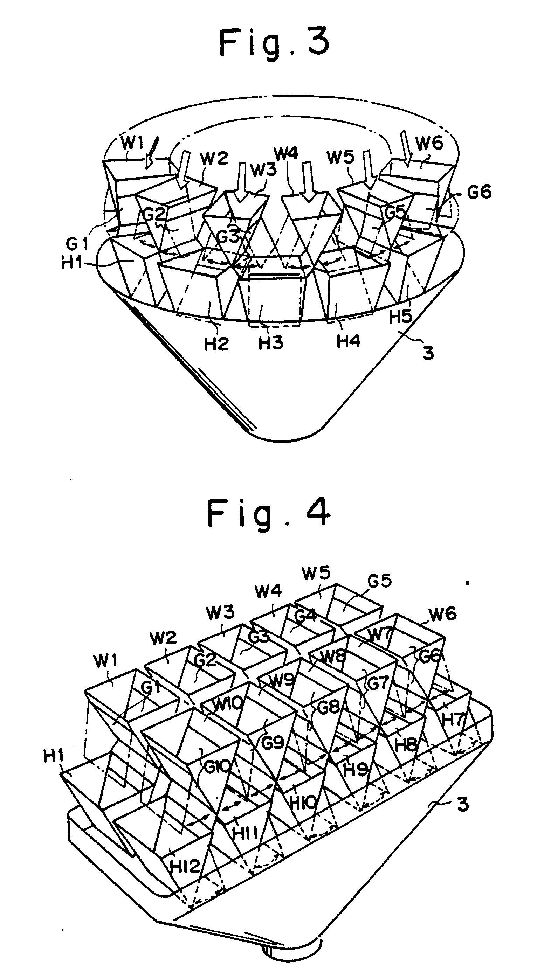

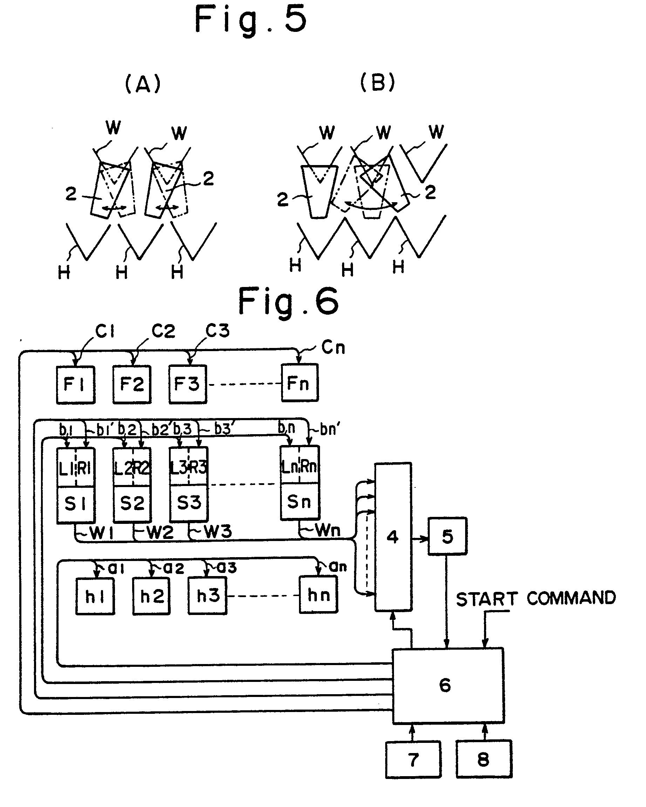

Fig. 3 is a perspective view showing the weighing hoppers and the storage hoppers of each of the combinatorial weighing apparatuses shown in Figs. 1 and 2. The weighing hoppers W1 - Wn are spaced at regular intervals, along a line which forms a circle, so that the directions of opening of the gates of each pair G1 - Gn are along the said line. The storage hoppers H1 - Hn are also disposed in a circular array, below the weighing hoppers W1 - Wn, so that each of the storage hoppers can receive articles discharged from either one of two adjacent weighing hoppers W1 - Wn. In other arrangements, shown in Figs. 5(A) and (B), each weighing hopper W has a distribution chute 2 below a discharge port of the weighing hopper for selectively supplying weighed articles into a plurality of storage hoppers H. Thus articles can be supplied to each of the storage hoppers H from at least two of the weighing hoppers W.

Fig. 4 shows an alternative arrangement in which a total of 10 weighing machines are disposed in two parallel straight lines and include weighing hoppers W1, ..., W10 and storage hoppers H1, ..., H12. The weighing hoppers W1 - W10 are spaced at regular intervals such that adjacent respective discharge gates of two adjacent weighing hoppers are positioned in confronting relationship to one other. The storage hoppers H1 - H12 are located below the weighing hoppers W1 - W10 in such a manner that each weighing hopper, in each line, can discharge articles selectively into either one of two mutually adjacent storage hoppers.

The control circuit of Fig. 6, for the apparatus of Fig. 2, includes a multiplexer 4 for successively applying weight values w1 - wn from the weight detectors S1 - Sn to an A/D converter 5 which converts the applied weight values into digital signals that will be applied to a control device 6.

The control device 6 comprises a computer and is programmed to execute the following control operation.

When a start command is issued from a packaging machine (not shown), the control device 6 carries out a combinatorial arithmetic process in which it adds combinations of weight data items derived from the said weight values w1 - wn and stored in specific memory areas of the device 6 so as to correspond to the respective individual quantities currently contained in the storage hoppers H1 - Hn. The results of this combinatorial arithmetic process, which makes use of a target weight value preset in a target weight setting unit 7 and an upper limit value (of an allowable range of combinatorial total weight values) set in an upper limit setting unit 8, are used to select a best acceptable (optimum) weight combination (having a total weight value equal to the target weight value, or closest thereto and within the preset allowable range). The control device 6 then selectively issues operation commands a1 - an to drivers h1 - hn for the storage hoppers H1 - Hn, to bring about discharge of the selected quantities of articles constituting the optimum weight combination from the storage hoppers concerned.

The control device 6 then determines which of the weighing machines will be required to charge fresh weighed quantities of articles into empty storage hoppers, from which articles have just been discharged, reads the associated weight values (w1 - wn) from the determined weighing machines, and stores corresponding weight data items in the appropriate memory areas. Next the control device 6 issues operation commands (b1 - bn, b1' - bn') to respective gate drivers, of a set indicated in Figure 6 by references L1 to Ln and R1 to Rn, of the said determined weighing machines so as to cause those machines to discharge their contained articles into the empty storage hoppers. The control device 6 then selectively issues operation commands (C1 - Cn) to those of the supply feeders F1 - Fn that correspond respectively to the newly emptied weighing hoppers, to cause those weighing hoppers to be replenished with fresh individual quantities of articles.

Where the apparatus of Fig. 1 is to be controlled, a control facility is added for opening and closing the gates of the pool hoppers P1 - Pn.

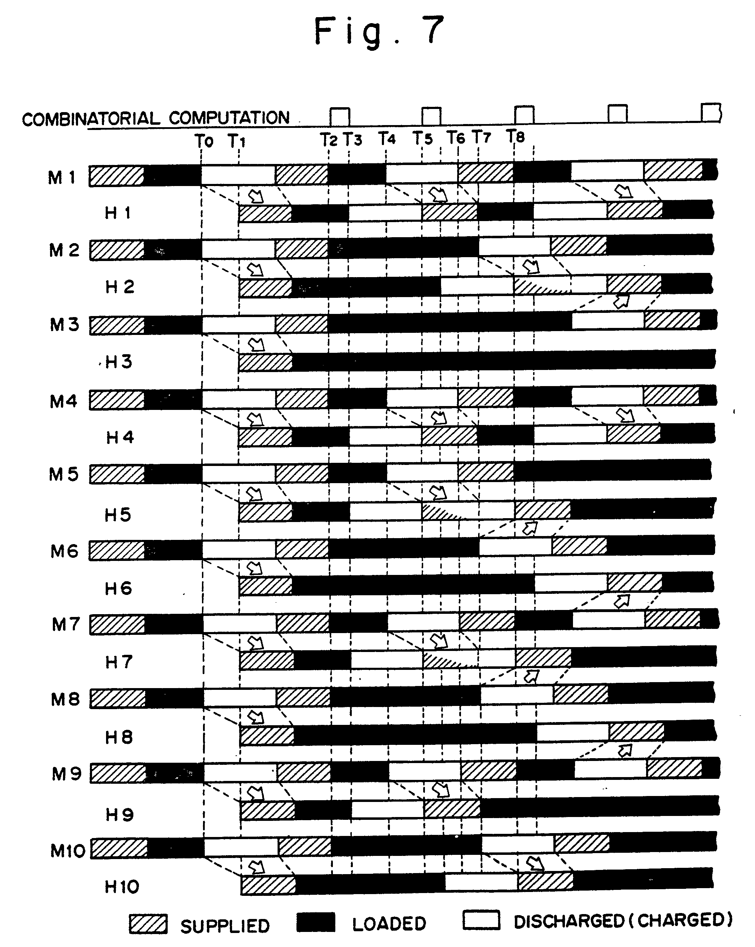

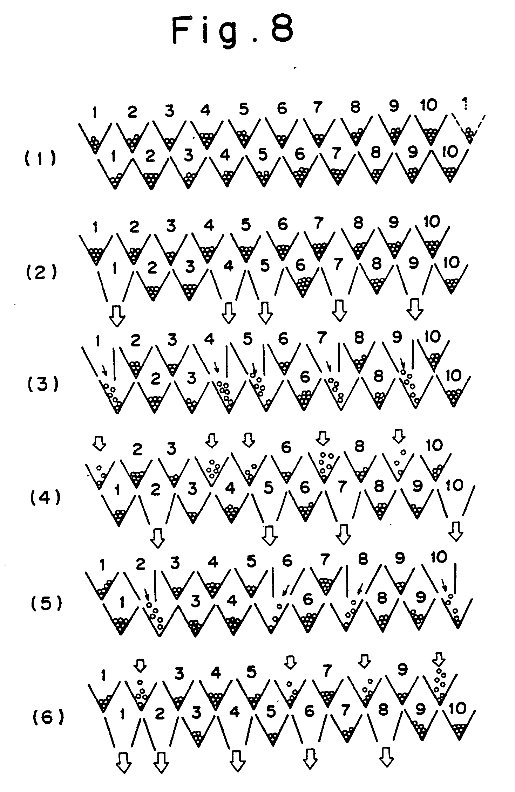

A weighing method embodying the present invention will now be described with reference to the timing chart of Fig. 7 and the operation diagram of Figs. 8(1) to 8(6). The method will be described with reference to the weighing apparatus of Figs. 2 and 6, in which no pool hoppers are provided and 10 weighing machines and 10 storage hoppers are employed.

Each hatched area in Fig. 7 indicates a supply of articles into a weighing hopper, of the weighing machines M1 - M10, or into one of the storage hoppers H1 - H10. A black area indicates that the hopper concerned is loaded, and a white area indicates a discharge of articles.

(1) Since all hoppers are empty at first, all the weighing machines M1 - M10 are supplied with articles simultaneously. At a time T0 when measured weight values from the weight detectors S1 - S10 have become stable, the control device 6 reads weight data from the weighing machines M1 - M10 and stores the weight data in specific memory areas. All of the storage hoppers H1 - H10 are then charged with weighed articles from the weighing machines, and fresh quantities of the articles are supplied into the empty weighing machines. Fig. 8(1) shows the condition in which such a second supply of articles has been completed.

There is a slight difference in time between the time T0, at which articles start being discharged from the weighing machines M1 - M10, and a time T1 when articles start being received in the storage hoppers H1 - H10, because of the time required for the articles to fall by gravity.

(2) The control device 6 effects a first combinatorial computation at a time T2, when the second supply of articles to the weighing machines M1 - M10 is complete. The combinatorial computation is effected in respect of the stored weight data items corresponding to the individual quantities of articles that have already been discharged into the storage hoppers H1 - H10. If the result of the computation is that the 1st, 4th, 5th, 7th and 9th storage hoppers H1, H4, H5, H7 and H9 are selected as giving an optimum weight combination, at a time T3, articles are immediately discharged from these selected storage hoppers. Fig. 8(2) illustrates the resulting condition.

(3) The control device 6 determines which of the weighing machines will be used to discharge fresh weighed articles into the just-emptied storage hoppers H1, H4, H5, H7 and H9. Having determined, in this example, that the weighing machines M1, M4, M5, M7 and M9 are the machines concerned, weight data items are derived respectively from these weighing machines by the control device 6 at a time T4, by which time measured weight values from the weight detectors in the weighing machines will have become stable, and stored in specific memory areas whereupon discharge of the weighed articles from the weighing machines M1, M4, M5, M7 and M9 into the empty storage hoppers H1, H4, H5, H7 and H9 is commenced. The resulting condition is illustrated in Fig. 8(3).

(4) The control device 6 starts to effect a second combinatorial computation at a time T5, when the articles discharged from the determined weighing machines begin to be received in the empty storage hoppers. If the result of the second computation is that the 2nd, 5th, 7th and 10th storage hoppers H2, H5, H7 and H10 are selected as giving an optimum weight combination, then discharge of the articles from these storage hoppers is immediately commenced. For the 5th and 7th storage hoppers, H5 and H7, there is no time delay between the charging and discharging of articles (as indicated by partial hatching in Fig. 7). Thus, articles discharged respectively from the weighing machines M5 and M7 to storage hoppers H5 and H7 pass directly through these storage hoppers without being detained therein.

(5) The just-emptied weighing machines M1, M4, M5, M7 and M9 start being supplied with fresh quantities of articles at a time T6, when the discharge gates of the weighing hoppers are closed. Subsequently, weighing machines are determined for charging weighed articles into the empty storage hoppers H2, H5, H7 and H10. Fig. 8(4) is illustrative of the situation at a time between the time T6 and the time T8.

(6) In this embodiment, either of the 2nd and 3rd weighing machines M2 and M3 can be used for discharging weighed articles into the second storage hopper H2. Likewise the 5th or 6th, 7th or 8th, and 10th or 1st weighing machines can be used selectively for discharging weighed articles respectively into the other just-emptied storage hoppers H5, H7 and H10. If the 2nd, 6th, 8th and 10th weighing machines are determined as the weighing machines for discharging articles next, the control device 6 derives weight data items from these weighing machines at the time T8, when measured weight values from the weight detectors in these weighing machines will have become stable. These weight data items are stored in specific memory areas, and discharge of the weighed articles from the weighing machines M2, M6, M8 and M10 into the empty storage hoppers H2, H5, H7 and H10 is commenced, as shown in Fig. 8(5).

(7) The control device begins a third combinatorial computation at the time T8, when articles discharged from weighing machines M2, M6, M8 and M10 first reach the empty storage hoppers concerned. If, as a result, the 1st, 2nd, 4th, 6th and 8th storage hoppers H1, H2, H4, H6 and H8 are selected as giving an optimum weight combination, articles are immediately discharged from these storage hoppers, and then fresh articles are supplied into the empty weighing machines M2, M6, M8 and M10. Fig. 8(6) shows this operation.

Thereafter, a similar process is repeated to carry out successive weighing cycles.

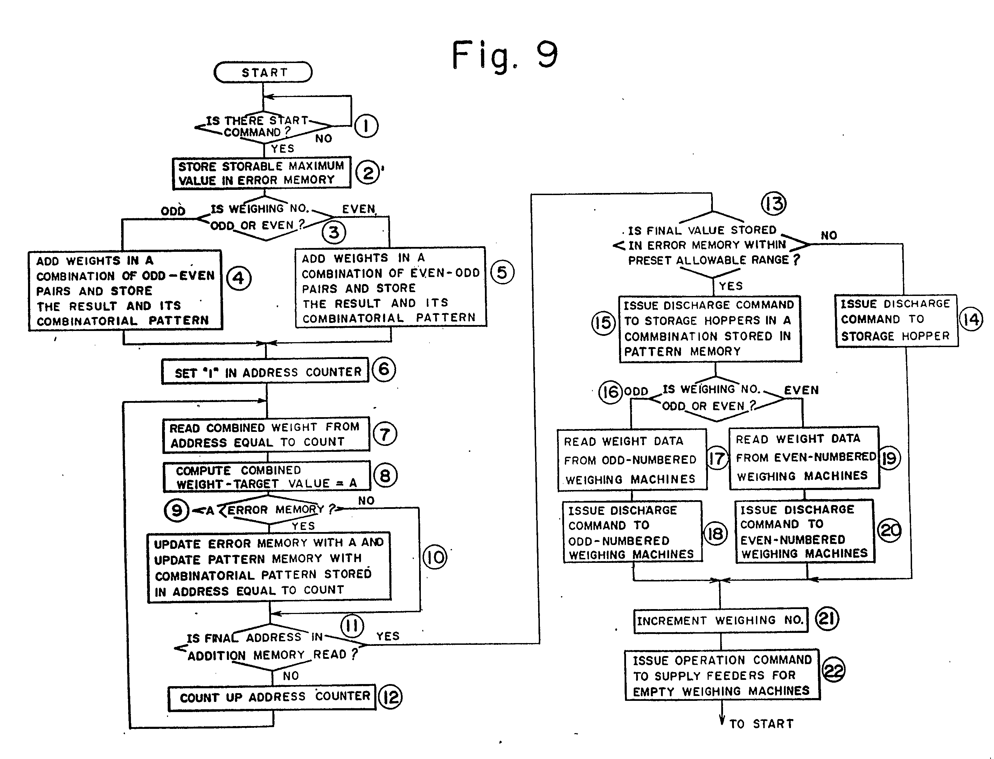

Fig. 9 is a flowchart of a program for executing a weighing operation, controlled by the control device 6 of Fig. 6, as follows.

The control device 6 repeats a checking process in a step (1) while waiting for a start command from a packaging machine (not shown). When a start command is received, the control device 6 stores in an error memory the maximum value that it is possible to store therein, by setting all bits in the error memory to "1" in a step (2). The error memory is provided for finding a best acceptable weight combination, in which the difference between a combinatorial total weight value and a preset target weight value is a minimum whilst being within a preset allowable range.

The control device 6 then determines in a step (3) whether the number of the current weighing cycle, in the sequence of cycles being performed, is odd or even. If odd, the program goes to a step (4) to effect combinatorial additions for all storage-hopper-combinations except those including even-odd pairs (for example H2, H3 or H10, H1) of adjacent storage hoppers, and to store the combinatorial total weight values and their respective combinatorial patterns in an addition memory.

If the cycle number is even, the program goes from step (3) to a step (5) to effect combinatorial additions for all combinations except those including odd-even pairs of adjacent storage hoppers, and to store the combinatorial total weight values and their respective combinatorial patterns in the addition memory.

Such branching from step (3) is effected to assist the smooth running of the weighing operations. More specifically, in an apparatus as shown in Figs. 1 through 4, when two adjacent storage hoppers, for example H2 and H3, are both selected in successive weighing cycles as part of an optimum combination, then either one of these two storage hoppers may, because of operational restrictions explained hereafter, be rendered incapable of being supplied with articles again in the subsequent supplying operation. To avoid such a problem, if the number of the current weighing cycle is odd, then a combinatorial computation is effected in which any combination including a pair of adjacent odd-even storage hoppers, such as [1st, 2nd], [5th, 6th] or [9th, 10th], is allowed, but any combination including a pair of adjacent even-odd storage hoppers, such as [2nd, 3rd] or [6th, 7th], is disallowed. In addition, any combination including three or more adjacent storage hoppers is disallowed because of restrictions on the recharging procedure to be explained below.

If the number of the current weighing cycle is even, then a combinatorial computation is effected in which any combination including an even-odd pair of adjacent storage hoppers is allowed, but any combination including an odd-even pair is disallowed. As before, any combination including three or more adjacent storage hoppers is also disallowed.

Although the total number of combinations is reduced by the above restrictions, the total number of combinations will be 728 even with such restrictions if 12 storage hoppers are available.

Therefore sufficient weighing accuracy can be maintained with a smaller number of weighing machines than would be possible with a conventional apparatus.

After the above process has been finished, in a step (6) the control device 6 sets an address counter to "1", reads out in a step (7) a combinatorial total weight value from an address in the addition memory that is specified by the current count value held in the address counter, and computes the difference A between this combinatorial total weight value and the preset target weight value in a step (8). The control device 6 then compares the result A with the content of the error memory in a step (9). If the result A is smaller than the content of the error memory, then the control device 6 updates the content of the error memory with the result A, and thereafter updates in a step (10) the content of a pattern memory with a combinatorial pattern stored at the address in the addition memory that is specified by the count in the counter. If the result A is equal to or greater than the content of the error memory, then the program skips the step (10) and goes to a step (11). The error memory, the addition memory, and the pattern memory referred to above are all contained in the control device 6.

The control device 6 then checks whether the content of a final address in the addition memory has been read out in the step (11). If it has not, the address counter is incremented in a step (12), and the program returns to the step (7). This loop is repeated until the content of the final address in the addition memory is read out, indicating that all combinatorial patterns have been processed. When the loop process is completed, the control device 6 determines in a step (13) whether the value stored finally in the error memory falls within a preset allowable range.

If the stored value is outside the allowable range, the program goes to a step (14) for additionally supplying articles into suitable storage hoppers. If the stored value is within the range, then in a step (15) the control device 6 issues a discharge command to the storage hoppers, selected as making up the best acceptable combination, in accordance with the pattern finally stored in the pattern memory.

The control device 6 then determines in a step (16) whether the number of the current weighing cycle is odd or even. If odd, only odd-numbered weighing machines will be used to replenish the just-emptied storage hoppers; hence the above-mentioned exclusion of even-odd pairs, and three consecutive hoppers, from the combinations to be considered in such a cycle. In a step (17) the control device 6 reads the weight data items from those of the weighing machines which have been determined (from among the odd-numbered machines) to discharge fresh articles into the just-emptied storage hoppers. The control device 6 then stores these weight data items in specific memory areas, and in a step (18) issues a discharge command to the respective weighing machines from which these weight data items have been read.

If the weighing cycle is an even numbered cycle, in a step (19) the control device 6 reads weight data items from those weighing machines which have been determined, from among the even numbered weighing machines only, to discharge fresh articles into the just-emptied storage hoppers. The control device 6 then stores these weight data items in the appropriate specific memory areas, and in a step (20) issues a discharge command to the weighing machines from which these weight data items have been read.

The weighing machines which are to discharge articles into the storage hoppers can be restricted in successive cycles to odd-numbered and even-numbered machines respectively as described above, since any permitted combination of storage hoppers can be charged with articles from substantially half the total number of weighing machines. Accordingly, when some weighing machines are weighing articles, other weighing machines can be discharging or receiving articles.

When the above process is over, in a step (21) the control device 6 increments the number of weighing cycles, and then in a step (22) issues an operation command to the supply feeders associated with the weighing machines from which the articles have just been discharged, whereupon articles start being supplied into those weighing machines. The program then goes back to the step (1) in which the control device 6 waits for a next start command.

Although certain preferred embodiments have been shown and described, it should be understood that many changes and modifications may be made therein without departing from the scope of the present invention. For example, each weight data item may be divided by a preset unit weight of an article to convert the weight into a number, so that combinatorial counting utilizing the number of articles or combinatorial counting utilizing the number and weight of articles can be effected in an embodiment of the present invention.

**Claims**

1. Combinatorial weighing apparatus, for measuring out a desired batch of articles, comprising:

a set of weighing hoppers (W1, .., Wn), for receiving individual quantities of the articles to be measured out, belonging to respective weighing machines (M1, .., Mn) for providing weight values indicative of the weights of the individual quantities in their respective weighing hoppers; and

a plurality of storage hoppers (H1, .., Hn) arranged for receiving respective such individual quantities, discharged into those hoppers from respective weighing hoppers of the said set, whilst a control device (6) of the apparatus completes a combinatorial computation operation based on a preset target total weight or number and on the weight values provided by the weighing machines for the respective individual quantities discharged into the storage hoppers, which operation serves to select a best acceptable combination of the said individual quantities discharged into the storage hoppers;

the said control device being operative on completion of the said combinatorial computation operation to cause the individual quantities belonging to the selected combination to be discharged, from the respective storage hoppers concerned, and brought together to form such a desired batch, whereafter those hoppers are caused to receive fresh individual quantities respectively from weighing hoppers of the said set;

characterised in that storage hoppers of the said plurality are arranged in a line, below a line of weighing hoppers of the said set, the apparatus being such that each pair of mutually adjacent weighing hoppers in the said line thereof is associated with one of the storage hoppers in the said line thereof so that either a first weighing hopper (W1) or an adjacent second weighing hopper (W2) of the said line thereof can be discharged selectively into a first storage hopper (H1) in the said line thereof, and so that either the said second weighing hopper (W2) or an adjacent third weighing hopper (W3) of the said line thereof can be discharged selectively into a second storage hopper (H2) in the said line thereof and adjacent to the said first storage hopper, and so on along the two lines.

2. Apparatus as claimed in claim 1, wherein each of the weighing hoppers of the said line thereof has two discharge gates (G) that can be opened selectively, in opposite directions respectively along the line of the weighing hoppers, to discharge the contents of the weighing hopper respectively into one or the other of two mutually adjacent storage hoppers of the said plurality.

3. Apparatus as claimed in claim 1 or 2, wherein the weighing hoppers of the said set are spaced at regular intervals along the said line thereof, which line forms a circle, and are equal in number to the storage hoppers of the said plurality, those storage hoppers being spaced at regular intervals along the said line thereof which also forms a circle.

4. Apparatus as claimed in claim 1 or 2, wherein the said line of weighing hoppers is a straight line of regularly spaced hoppers, the weighing hoppers of the said set comprising two such lines (W1 - W5, and W6 - W10) of regularly spaced weighing hoppers.

5. Apparatus as claimed in any preceding claim, wherein the said control device (6) is such as to treat the weighing hoppers of the said line thereof as being divided into first and second sub-sets, those of the first subset (W1, W3,...) alternating along the line with those of the second sub-set (W2, W4,...), so that only weighing hoppers of the first subset are employed, in one cycle of operation of the apparatus, to discharge such fresh individual quantities into the selection of storage hoppers discharged in that cycle, and so that only weighing hoppers of the second subset are employed, in the next cycle of operation of the apparatus, to discharge such fresh individual quantities into the selection of storage hoppers discharged in that next cycle, and so on alternately in successive cycles.

6. Apparatus as claimed in claim 5, wherein the said control device (6) is such as to exclude the possibility of selecting, as the said best acceptable combination, any combination including three individual quantities occupying respectively three successive storage hoppers of the said line thereof, and to exclude also in any even-numbered cycle of a series of such cycles of operation any combination including two individual quantities occupying respectively an odd-even pair (W1, W2; W3, W4; ...) of mutually adjacent storage hoppers of the said line thereof, and to exclude also in any odd-numbered cycle of the said series any combination including two individual quantities occupying respectively an even-odd pair (W2, W3; W4, W5; ...) of mutually adjacent storage hoppers of the said line thereof.

7. A method of employing a set of weighing machines to measure out desired batches of articles by carrying out repeatedly a combinatorial weighing cycle, in which cycle:

respective weighing hoppers (W1, .., Wn) of the machines (M1, .., Mn) of the said set are supplied with individual quantities of the articles to be measured out, so that the machines provide respective weight values indicative of the weights of the individual quantities concerned; and

a plurality of storage hoppers (H1, .., Hn) are used to receive respective such individual quantities, discharged from weighing hoppers of the said set, during completion of a combinatorial computation operation based on a preset target total weight or number and on the weight values provided by the weighing machines for the respective individual quantities discharged into the storage hoppers, which operation serves to select a best acceptable combination of the said individual quantities discharged into the storage hoppers;

whereafter the individual quantities belonging to the selected combination are discharged from the respective storage hoppers which received those quantities, and brought together to form such a desired batch, and those hoppers are supplied with fresh such individual quantities respectively from weighing hoppers of the said set;

characterised in that storage hoppers of the said plurality are arranged in a line, below a line of the weighing hoppers of the said set, each pair of mutually adjacent weighing hoppers in the said line thereof being dischargeable into a commonly associated one of the storage hoppers in the said line thereof, and in that in one such cycle a first weighing hopper (W1) of the said line thereof is discharged into a first storage hopper (H1) in the said line thereof, whilst in another such cycle a second weighing hopper (W2) adjacent to the said first weighing hopper in the said line thereof is discharged into the said first storage hopper (H1), and in that in one such cycle the said second weighing hopper (W2) is discharged into a second storage hopper (H2) adjacent to the said first storage hopper in the said line thereof, whilst in another such cycle a third weighing hopper (W3) adjacent to the said second weighing hopper in the said line thereof is discharged into the said second storage hopper (H2), and so on for the other storage hoppers and their associated pairs of the weighing hoppers of the respective lines thereof.

8. A method as claimed in claim 7, employing apparatus as claimed in any one of claims 2 to 6.

**Patentansprüche**

1. Kombinatorische Wägevorrichtung zum Ausmessen einer gewünschten Artikelcharge, mit

- einer Gruppe von zu jeweiligen Wägemaschinen (M1,...,Mn) gehörenden Wägebehältern (W1,...Wn) zur Aufnahme individueller Mengen der auszumessenden Artikel, zum Liefern von Gewichtswerten, welche die Gewichte der individuellen Mengen in ihren jeweiligen Wägebehältern anzeigen; und

- einer Gruppe von Speicherbehältern (H1,...,Hn) zum Aufnehmen von solchen jeweiligen individuellen Mengen, welche aus den jeweiligen Wägebehältern der genannten Gruppe in diese Behälter ausgegeben wurden, während eine Steuereinrichtung (6) der Vorrichtung einen kombinatorischen Rechenvorgang abschließt, der auf einem voreingestellten Zielgesamtgewicht oder einer Zielgesamtzahl und auf den von den Wägemaschinen für die in die Speicherbehälter ausgegebenen jeweiligen individuellen Mengen gelieferten Gewichtswerten basiert, wobei der Rechenvorgang zur Auswahl einer besten akzeptablen Kombination der genannten in die Speicherbehälter ausgegebenen individuellen Mengen dient;

wobei die Steuereinrichtung nach Abschluß des kombinatorischen Rechenvorgangs derart betreibbar ist, daß sie die Ausgabe der zu der gewählten Kombination gehörenden individuellen Mengen aus den betreffenden jeweiligen Speicherbehältern, und das Zusammenbringen zum Bilden einer gewünschten Charge veranlasst, wonach diese Behälter jeweils zur Aufnahme neuer individueller Mengen aus Wägebehältern der genannten Gruppe veranlaßt werden;

dadurch gekennzeichnet, daß

Speicherbehälter der genannten Gruppe unterhalb einer Reihe von Wägebehältern der genannten Gruppe in einer Reihe angeordnet sind, wobei die Vorrichtung derart ausgebildet ist, daß jedem Paar gegenseitig benachbarter Wägebehälter der Reihe von Wägebehältern einer der Speicherbehälter der Reihe von Speicherbehältern zugeordnet ist, so daß entweder ein erster Wägebehälter (W1) oder ein benachbarter zweiter Wägebehälter (W2) der Reihe von Wägebehältern wahlweise in einen ersten Speicherbehälter (H1) der Reihe von Speicherbehältern entleert werden kann, und so daß entweder der genannte zweite Wägebehälter (W2) oder ein benachbarter dritter Wägebehälter (W3) der Reihe von Wägebehältern wahlweise in einen zweiten dem ersten Speicherbehälter benachbarten Speicherbehälter (H2) in der Reihe von Speicherbehältern entleert werden kann, und so weiter entlang den beiden Reihen.

2. Vorrichtung nach Anspruch 1, bei der jeder der Wägebehälter der Reihe von Wägebehältern zwei Ausgabetore (G) aufweist, welche wahlweise in jeweils entgegengesetzter Richtung entlang der Reihe von Wägebehältern geöffnet werden können, um den Inhalt des Wägebehälters jeweils in den einen oder den anderen von zwei gegenseitig benachbarten Speicherbehältern der genannten Gruppe auszugeben.

3. Vorrichtung nach Anspruch 1 oder 2, bei der die Wägebehälter der Gruppe in der einen Kreis bildenden Reihe von Wägebehältern in regelmäßigen Intervallen beabstandet sind und ihre Anzahl derjenigen der Speicherbehälter der genannten Gruppe gleich ist, wobei die Speicherbehälter in der ebenfalls einen Kreis bildenden Reihe von Speicherbehältern in regelmäßigen Intervallen beabstandet sind.

4. Vorrichtung nach Anspruch 1 oder 2, bei der die Reihe von Wägebehältern eine gerade Reihe regelmäßig beabstandeter Behälter ist, wobei die Wägebehälter der genannten Gruppe zwei solche Reihen (W1-W5, W6-W10) regelmäßig beabstandeter Wägebehälter umfassen.

5. Vorrichtung nach einem der vorhergehenden Ansprüche, bei der die Steuereinrichtung (6) so ausgebildet ist, daß sie die Wägebehälter der Reihe von Wägebehältern so behandelt, als seien sie in eine erste und eine zweite Untergruppe unterteilt, wobei diejenigen der ersten Untergruppe (W1, W3...) in der Reihe mit denjenigen der zweiten Untergruppe (W2, W4...) abwechseln, so daß in einem Arbeitszyklus der Vorrichtung nur Wägebehälter der ersten Untergruppe zur Ausgabe neuer individueller Mengen in die Auswahl der in diesem Zyklus entleerten Speicherbehälter verwendet werden, und so daß im nächsten Arbeitszyklus der Vorrichtung nur Wägebehälter der zweiten Untergruppe zur Ausgabe neuer individueller Mengen in die Auswahl von in diesem nächsten Zyklus entleerten Speicherbehältern ausgegeben werden, und abwechselnd so weiter in nachfolgenden Zyklen.

6. Vorrichtung nach Anspruch 5, bei der die Steuereinrichtung (6) so ausgebildet ist, daß sie die Möglichkeit der Wahl einer Kombination mit drei individuellen Mengen, welche jeweils drei aufeinanderfolgende Speicherbehälter der Reihe von Speicherbehältern belegen, als die genannte beste akzeptable Kombination ausschließt, und ebenfalls in jedem geradzahligen Zyklus einer Serie solcher Arbeitszyklen jede Kombination ausschließt, die zwei individuelle Mengen umfaßt, die jeweils ein ungerade-gerades Paar (W1, W2; W3, W4;...) von gegenseitig benachbarten Speicherbehältern der Reihe von Speicherbehältern belegen, und auch in jedem ungeradzahligen Zyklus der genannten Serie jede Kombination ausschließt, die zwei individuelle Mengen umfaßt, welche jeweils ein gerade-ungerades Paar (W2, W3; W4, W5;...) von gegenseitig benachbarten Speicherbehältern der Reihe von Speicherbehältern belegen.

7. Verfahren zur Benutzung einer Gruppe von Wägemaschinen zum Ausmessen gewünschter Artikelchargen durch wiederholtes Ausführen eines kombinatorischen Wägezyklus in dem

- jeweilige Wägebehälter (W1,...,Wn) der Maschinen (M1,...,Mn) der genannten Gruppe mit individuellen Mengen der auszumessenden Artikel beschickt werden, so daß die Maschinen Gewichtswerte liefern, welche die Gewichte der betreffenden individuellen Mengen anzeigen; und

- eine Gruppe von Speicherbehältern (H1...Hn) zum Aufnehmen solcher jeweiligen individuellen Mengen benutzt wird, welche während eines kombinatorischen Rechenvorgangs, der auf einem voreingestellten Zielgesamtgewicht oder einer Zielgesamtzahl und auf den von den Wägemaschinen für die in die Speicherbehälter ausgegebenen jeweiligen individuellen Mengen gelieferten Gewichtswerten basiert, aus Wägebehältern der genannten Gruppe ausgegeben wurden, wobei der Rechenvorgang zur Auswahl einer besten akzeptablen Kombination der in die Speicherbehälter ausgegebenen individuellen Mengen dient;

- die zur gewählten Kombination gehörenden individuellen Mengen danach aus den jeweiligen Speicherbehältern, welche mit diesen Mengen beschickt wurden, ausgegeben, und zum Bilden einer solchen gewünschten Charge zusammengebracht werden, und diese Behälter jeweils mit neuen individuellen Mengen aus Wägebehältern der genannten Gruppe beschickt werden;

dadurch gekennzeichnet, daß

Speicherbehälter der genannten Gruppe unterhalb einer Reihe der Wägebehälter der genannten Gruppe in einer Reihe angeordnet sind, wobei jedes Paar gegenseitig in der genannten Reihe von Wägebehältern benachbarter Wägebehälter in einen gemeinsam zugeordneten Speicherbehälter in der Reihe von Speicherbehältern entleerbar ist, und daß in einem solchen Zyklus ein erster Wägebehälter (W1) der Reihe von Wägebehältern in einen ersten Speicherbehälter (H1) in der Reihe von Speicherbehältern entleert wird, während in einem anderen Zyklus ein zweiter dem ersten Wägebehälter (W1) benachbarter Wägebehälter (W2) der Reihe von Wägebehältern in den ersten Speicherbehälter (H1) entleert wird, und daß der zweite Wägebehälter (W2) in einem solchen Zyklus in einen dem ersten Speicherbehälter in der Reihe von Speicherbehältern benachbarten zweiten Speicherbehälter (H2) entleert wird, während in einem anderen solchen Zyklus ein dem zweiten Wägebehälter in der Reihe von Wägebehältern benachbarter dritter Wägebehälter (W3) in den zweiten Speicherbehälter (H2) entleert wird, und so weiter für die anderen Speicherbehälter und die ihnen zugeordneten Paare von Wägebehältern der jeweiligen Reihen.

8. Verfahren nach Anspruch 7 unter Verwendung einer Vorrichtung nach einem der Ansprüche 2 bis 6.

**Revendications**

1. Appareil de pesage combinatoire, pour mesurer un lot voulu d'objets, comportant:

un ensemble de trémies de pesage (W1, .., Wn), pour recevoir des quantités individuelles des objets à mesurer, appartenant à des machines de pesage respectives (M1, .., Mn) pour fournir des valeurs indicatrices du poids des quantités individuelles présentes dans les machines de pesage respectives; et

une pluralité de trémies de stockage (H1, .., Hn) agencées pour recevoir de telles quantités individuelles respectives, déchargées dans ces trémies à partir de trémies de pesage respectives dudit ensemble, tandis qu'un dispositif de commande (6) de l'appareil termine une opération de calcul combinatoire basées sur un poids ou nombre total visé préalablement établi et sur les valeurs de poids fournies par les machines de pesage pour les quantités individuelles respectives déchargées dans les trémies de stockage, laquelle opération sert à choisir la meilleure combinaison acceptable desdites quantités individuelles déchargées dans les trémies de stockage;

ledit dispositif de commande servant, au terme de ladite opération de calcul combinatoire, à amener les quantités individuelles appartenant à la combinaison choisie à être déchargées des trémies de stockage respectives concernées et à être regroupées les unes avec les autres pour former le lot voulu, après quoi ces trémies sont amenées à recevoir respectivement de nouvelles quantités individuelles depuis des trémies de pesage dudit ensemble;

caractérisé en ce que les trémies de stockage de ladite pluralité sont disposées en ligne, sous une ligne de trémies de pesage dudit ensemble, l'appareil étant tel que chaque paire de trémies de pesage mutuellement contiguës dans ladite ligne de celles-ci est associée à une des trémies de stockage de ladite ligne de celles-ci de façon que, soit une première trémie de pesage (W1), soit une seconde trémie de pesage contiguë (W2) de ladite ligne de trémies puisse être sélectivement déchargée dans une première trémie de stockage (H1) de ladite ligne de ces trémies, et de façon que, soit ladite seconde trémie de pesage (W2), soit une troisième trémie de pesage contiguë (W3) de ladite ligne de ces trémies puisse être sélectivement déchargée dans une seconde trémie de stockage (H2) de ladite ligne de ces trémies et située dans une position contiguë à ladite première trémie de stockage, et ainsi de suite le long des deux lignes.

2. Appareil selon la revendication 1, dans lequel chacune des trémies de pesage de ladite ligne de ces trémies a deux trappes de déchargement (G) qui peuvent être ouvertes sélectivement, respectivement dans des directions opposées le long de la ligne des trémies de pesage, afin de décharger le contenu de la trémie de pesage respectivement dans l'une ou l'autre des deux trémies de stockage, mutuellement contiguës, de ladite pluralité.

3. Appareil selon la revendication 1 ou 2, dans lequel les trémies de pesage dudit ensemble sont espacées à intervalles réguliers le long de ladite ligne de ces trémies, laquelle ligne forme un cercle, et sont égales en nombre aux trémies de stockage de ladite pluralité, ces trémies de stockage étant espacées à intervalles réguliers le long de ladite ligne de ces trémies qui forme aussi un cercle.

4. Appareil selon la revendication 1 ou 2, dans lequel ladite ligne de trémies de pesage est une ligne droite de trémies régulièrement espacées, les trémies de pesage dudit ensemble constituant deux telles lignes (W1 - W5, et W6 - W10) de trémies de pesage régulièrement espacées.

5. Appareil selon l'une quelconque des revendications précédentes, dans lequel ledit dispositif de commande (6) est conçu pour traiter les trémies de pesage de ladite ligne de celles-ci comme étant divisées en un premier et

des trémies de pesage respectives (W1, .., Wn) des machines (M1, .., Mn) dudit ensemble reçoivent des quantités individuelles des objets à mesurer, de façon que les machines fournissent des valeurs respectives de poids indicatrices des poids des quantités individuelles concernées; et

une pluralité de trémies de stockage (H1, .., Hn) servent à recevoir ces quantités individuelles respectives, déchargées à partir de trémies de pesage dudit ensemble, pendant l'achèvement d'une opération de calcul combinatoire reposant sur un poids ou nombre total visé préalablement établi et sur les valeurs de poids fournies par les machines de pesage pour les quantités individuelles respectives déchargées dans les trémies de stockage, laquelle opération sert à choisir une combinaison optimale la plus acceptable desdites quantités individuelles déchargées dans les trémies de stockage;

après quoi les quantités individuelles appartenant à la combinaison choisie sont déchargées des trémies de stockage respectives qui ont reçu ces quantités, et sont regroupées les unes avec les autres pour former le lot voulu, et ces trémies reçoivent respectivement des trémies de pesage dudit ensemble les nouvelles quantités individuelles;

caractérisé en ce que les trémies de stockage de ladite pluralité sont disposées en une ligne, sous une ligne des trémies de pesage dudit ensemble, chaque paire de trémies de pesage mutuellement contiguës de ladite ligne de celles-ci étant déchargeable dans une des trémies de stockage de ladite ligne de trémies de stockage, qui est associée de façon commune à cette paire, et en ce que dans un de ces cycles, une première trémie de pesage (W1) de ladite ligne de ces trémies est déchargée dans une première trémie de stockage (H1) de ladite ligne de ces trémies, tandis que lors d'un autre de ces cycles, une seconde trémie de pesage (W2) contiguë à un second sous-ensembles, celles du premier sous-ensemble (W1, W3,...) alternant le long de la ligne avec celles du second sous-ensemble (W2, W4,...), de façon que seules des trémies de pesage du premier sous-ensemble soient employées, lors d'un premier cycle de fonctionnement de l'appareil, pour décharger ces nouvelles quantités individuelles dans la sélection de trémies de stockage déchargées lors de ce cycle, et de façon que seules des trémies de pesage du second sous-ensemble soient employées, lors du cycle suivant de fonctionnement de l'appareil, pour décharger ces nouvelles quantités individuelles dans la sélection de trémies de stockage déchargées lors de ce cycle suivant, et ainsi de suite alternativement lors des cycles successifs.

6. Appareil selon la revendication 5, dans lequel ledit dispositif de commande (6) est conçu pour exclure le risque d'un choix, comme ladite meilleure combinaison acceptable, de toute combinaison comprenant trois quantités individuelles occupant respectivement trois trémies de stockage successives de ladite ligne de celles-ci, et pour exclure également lors de tout cycle de nombre pair d'une série de tels cycles de fonctionnement toute combinaison comprenant deux quantités individuelles occupant respectivement un couple impair-pair (W1, W2; W3, W4;...) de trémies de stockage, mutuellement contiguës, de ladite ligne de celles-ci, et pour exclure également dans tout cycle de nombre impair de ladite série toute combinaison comprenant deux quantités individuelles occupant respectivement un couple pair-impair (W2, W3; W4, W5;...) de trémies de stockage, mutuellement contiguës, de ladite ligne de celles-ci.

7. Procédé d-utilisation d'un ensemble de machines de pesage pour mesurer des lots voulus d'objets en effectuant de manière répétitive un cycle de pesage combinatoire, cycle dans lequel:

ladite première trémie de pesage de ladite ligne de ces trémies est déchargée dans ladite première trémie de stockage (H1), et en ce que dans un de ces cycles ladite seconde trémie de pesage (W2) est déchargée dans une seconde trémie de pesage (H2) contiguë à ladite première trémie de stockage de ladite ligne de ces trémies, tandis que lors d'un autre de ces cycles, une troisième trémie de pesage (W3) contiguë à ladite seconde trémie de pesage de ladite ligne de ces trémies est déchargée dans ladite seconde trémie de stockage (H2), et ainsi de suite pour les autres trémies de stockage et leurs paires associées de trémies de pesage des lignes respectives de ces trémies.

8. Procédé selon la revendication 7, employant l'appareil revendiqué dans l'une quelconque des revendications 2 à 6.

# Fig. 1

# Fig.2

1

# Fig. 3

# Fig. 4

2

# Fig. 5

(A)  (B)

# Fig. 6

3

EP 0 140 624 B1

Fig. 7

SUPPLIED    LOADED    DISCHARGED (CHARGED)

4

# Fig.8

# Fig. 9

START

① IS THERE START COMMAND ? — NO

YES

② STORE STORABLE MAXIMUM VALUE IN ERROR MEMORY

③ IS WEIGHING NO. ODD OR EVEN ? — ODD / EVEN

④ ADD WEIGHTS IN A COMBINATION OF ODD – EVEN PAIRS AND STORE THE RESULT AND ITS COMBINATORIAL PATTERN

⑤ ADD WEIGHTS IN A COMBINATION OF EVEN-ODD PAIRS AND STORE THE RESULT AND ITS COMBINATORIAL PATTERN

⑥ SET "I" IN ADDRESS COUNTER

⑦ READ COMBINED WEIGHT FROM ADDRESS EQUAL TO COUNT

⑧ COMPUTE COMBINED WEIGHT-TARGET VALUE = A

⑨ A < ERROR MEMORY ? — NO

YES

⑩ UPDATE ERROR MEMORY WITH A AND UPDATE PATTERN MEMORY WITH COMBINATORIAL PATTERN STORED IN ADDRESS EQUAL TO COUNT

⑪ IS FINAL ADDRESS IN ADDITION MEMORY READ ? — YES

NO

⑫ COUNT UP ADDRESS COUNTER

⑬ IS FINAL VALUE STORED IN ERROR MEMORY WITHIN PRESET ALLOWABLE RANGE ? — NO

YES

⑭ ISSUE DISCHARGE COMMAND TO STORAGE HOPPER

⑮ ISSUE DISCHARGE COMMAND TO STORAGE HOPPERS IN A COMMBINATION STORED IN PATTERN MEMORY

⑯ IS WEIGHING NO. ODD OR EVEN ? — ODD / EVEN

⑰ READ WEIGHT DATA FROM ODD-NUMBERED WEIGHING MACHINES

⑲ READ WEIGHT DATA FROM EVEN-NUMBERED WEIGHING MACHINES

⑱ ISSUE DISCHARGE COMMAND TO ODD-NUMBERED WEIGHING MACHINES

⑳ ISSUE DISCHARGE COMMAND TO EVEN-NUMBERED WEIGHING MACHINES

㉑ INCREMENT WEIGHING NO.

㉒ ISSUE OPERATION COMMAND TO SUPPLY FEEDERS FOR EMPTY WEIGHING MACHINES

TO START

EP 0 140 624 B1